# EUROPEAN PATENT SPECIFICATION

(11) **EP 0 603 331 B1**
(45) Date of publication and mention of the grant of the patent: **21.08.1996**
(21) Application number: 92920683.7
(22) Date of filing: 08.09.1992
(51) Int. Cl.: G09B 29/00

(54) **METHOD FOR PRODUCING A MAP OF A BUILT-UP AREA**
VERFAHREN ZUR HERSTELLUNG EINES ORTS- UND STADTPLANS
PROCEDE PERMETTANT DE CARTOGRAPHIER UNE AGGLOMERATION URBAINE

(30) Priority: 09.09.1991 BE 9100834
(43) Date of publication of application: 29.06.1994
(73) Proprietor: WOLTERS-NOORDHOFF B.V., NL-9728 PS Groningen (NL)
(72) Inventor: CAVE, Johanna, Maria, Antjen, Theresia, NL-5066 CT Moergestel (NL)
(74) Representative: 't Jong, Bastiaan Jacobus
(86) International application number: NL9200153
(87) International publication number: WO9305495

(56) References cited:
- EP-A- 0 354 684
- DE-A- 2 828 268
- DE-A- 3 424 379
- FR-A- 1 108 264
- FR-A- 2 160 256
- FR-A- 2 160 701
- FR-A- 2 618 933
- US-A- 3 287 831

## Description

The invention relates to a method for producing a map of a built-up area, in particular, a street map, with which a determined address can be found quickly and accurately.

Maps of the present type are generally known. In the case of street maps, these are generally provided with a grid, the columns and rows of which are designated with letters and numbers and a street name index is added in which the street names are included in alphabetical order, related to the sectors of the grid designated with the letter/number combination in which the relevant street is shown on the map.

The invention now has for its object to provide a method for producing a map which is simple to use and with which a desired location can be found immediately.

To this end there is provided a method according to claim 1.

The map produced with the method according to the invention makes it possible to find the desired location directly on the basis of the address code. Consulting of an index is not necessary. Given the system used in the usual public address coding, a series of maps can usefully be produced, wherein the desired specific map is also simple to find on the basis of the known address code of the location being sought.

To find a particular location it is often sufficient to be able to find the sub-sector. According to a further development the method of claim 2 is applied. The map obtained with this method provides a more accurate orientation so that little or no time is lost in looking for the location. A favourable embodiment is characterized in claim 3. The use of colours enables recognition of the correct sub-sector at a single glance.

According to a further development the method according to claim 4 is applied. If only the name of the desired location is known and not the associated address code, the correct associated marking can be looked up quickly by consulting the added key, which marking can be found at a glance in the relevant map. When compared to the known system with a grid orientation the map obtained with this method therefore has the advantage that the relevant sub-sector can easily be localized at a glance in the map itself without the intermediate step of determining row and column, as required with the above described grid system.

The key added according to the preferred method of claim 4 can also be used for user orientation when he is in the area without knowing his position on the map. The user can look up an object name, such as a street name read on a name-board, in the index and find his position on the map on the basis of the marking found therewith.

In the further development according to claim 5, the group of names associated with the relevant marking can be found at a glance in the second index.

The Netherlands post code system can be used favourably in the method as characterized in claim 6. In the Netherlands post code system the first numeral pair designates the post code district, which normally coincides with a town or village. The second numeral pair is related to a locality in that district. The first letter of the post code corresponds with a group of streets, while the second letter refines this designation to one particular street. Together with the house number the post code thus provides an unambiguous orientation of a relevant address.

In larger post code districts a separate map can be made for each locality with the method according to the invention, wherein the sub-sectors consist of a group of streets designated with the first letter in the post code system. This group of streets, which thus correspond with one determined letter, is allotted a determined marking. The marking used, which may contain a colour, a stripe pattern or a combination of both of these, can be shown in simple manner in the key forming part of the map in squares next to the relevant letters. The desired marking, and therefore the desired sub-sector on the map, can thereby be found at a single glance.

According to claim 7 the individual streets in each group of streets can be designated with the corresponding letter pair.

The invention will be elucidated hereinbelow with reference to the annexed figures.

Figure 1 shows a map produced in accordance with a preferred embodiment of the method according to the invention.

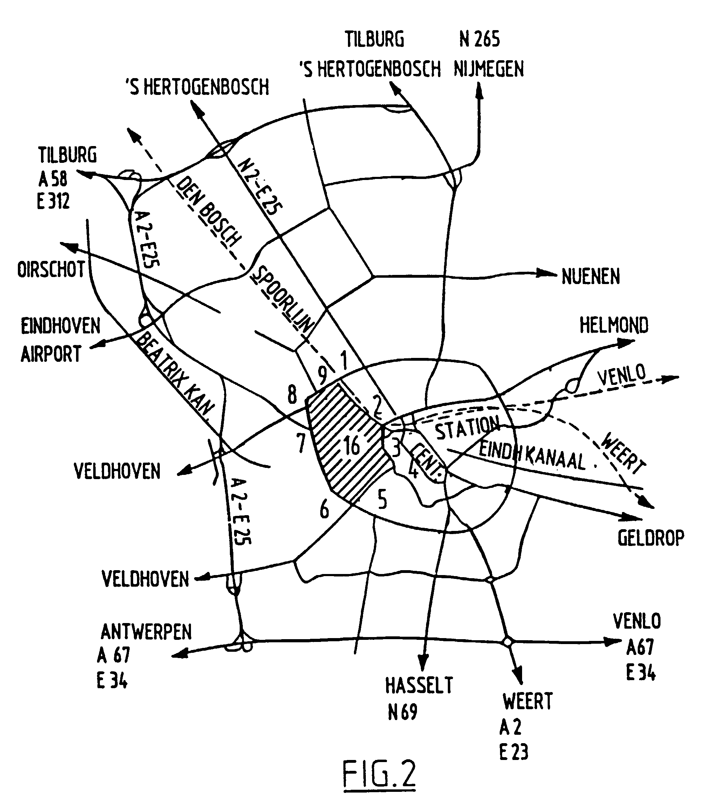

Figure 2 shows on a larger scale the portion of the map indicated by II in figure 1.

Figure 3 shows on a larger scale the portion of the map indicated by III in figure 1.

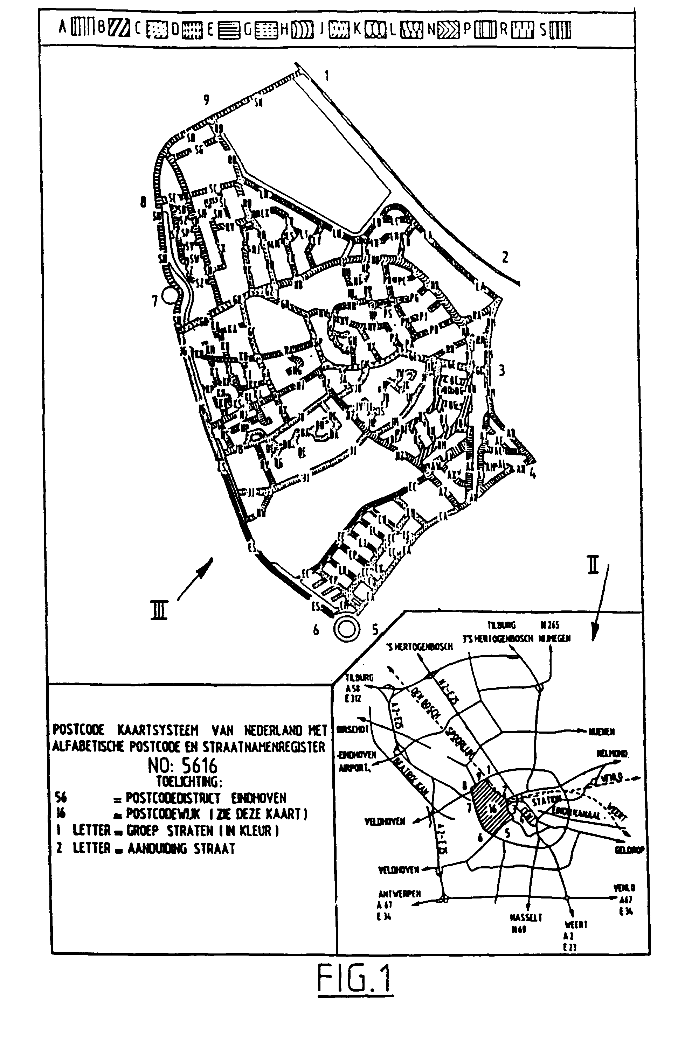

The map shown in figure 1 relates to a locality in the Dutch town of Eindhoven. The map comprises four sections. The section designated with II gives an overview of the area in which the detail map designated with III lies. The map further comprises at the top a key, to be further described hereinafter, of the markings used in the map III and an explanation of the system used for the marking.

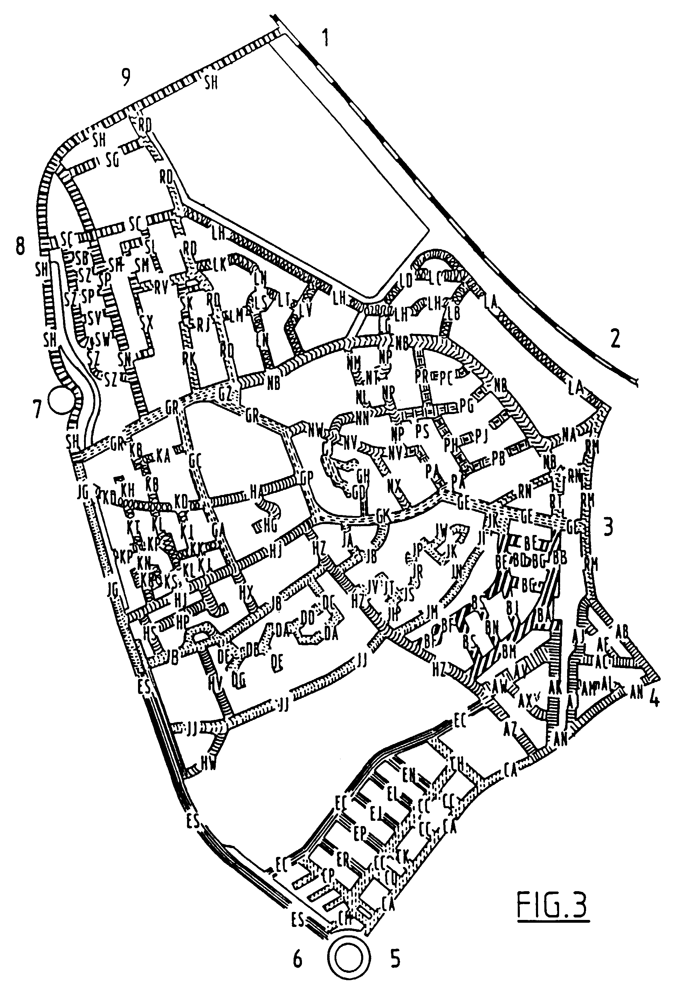

According to the present method for producing the map shown in figure 1, an illustration substantially to scale of relevant objects in the area is first made. Since in the present case a street map is being produced, the relevant objects here are the streets in the area. With the phrase "substantially to scale" is meant that for the sake of clarity there may be deviation from the actual scale proportions. In the map shown in figure 3 the width of the streets is thus shown proportionally larger.

A number of sub-sectors each comprising a group of streets is shown in the illustration of figure 3. These sub-sectors are chosen in accordance with the Netherlands post code system. According to this post code system each of the separate sub-sectors is designated with a unique combination of two numeral pairs and one letter pair. The first numeral pair designates the post code district, in the present case Eindhoven, and the second numeral pair the locality in that district. The figures relate to post code locality 16. All addresses in the relevant locality as shown in figure 3 have a post code beginning with the number 5616. The first letter in the post code designates a group of streets and the second letter a specific street in this group. The markings of the sub-sectors are now selected such that each sub-sector, that is, each group of streets with the same first letter in the post code, has been given an individually recognizable marking. This marking is indicated at the top of the map of figure 1 together with the associated letter of the group of streets. Further shown on the illustration of figure 3 is the complete letter pair in each street. This added marking of the separate streets is thus a refinement of the markings of the streets in groups. After an illustration is thus composed as shown in figure 1, a film of this illustration is made, a printing plate is manufactured and sheet material is printed using the printing plate. The printed sheet material is subsequently finished to a ready-to-use map. These final steps of the method are generally common in the printing art and therefore require no further description.

With the thus produced map a particular location can be found very simply. The only condition is that the post code of the location is known. As already noted, the two numeral pairs of the post code indicate respectively the post code district and the post code locality. The map of the relevant locality is thus very simple to find in a collection of maps, when these maps are combined in numeral sequence. The district map II clarifies the formation of the relevant area. The numerals 1-9 indicate the correlation between the overview of II and the detail of III.

Once the user has arrived in the post code locality, he selects with reference to the key at the top of the map the marking which corresponds with the first letter of the post code of the location being sought. As soon as he arrives in the relevant area he looks for the correct street on the map III. Having arrived in the street he has only to look for the house number.

The markings shown in the figures are markings based on determined black and white patterns. Other markings can however also be used, and colour markings are particularly recommended. These can be recognized at a glance. With the present example, wherein fourteen different markings are used, a very good overview can be obtained when use is made of for instance four colours, red, blue, green and yellow, which are used separately or in combinations. When the same marking is combined in each case with a determined first letter of the post code for each map of a series of maps, a regular user will quite quickly be able to do without consulting the key.

According to a preferred embodiment an alphabetic street name index is added to each map such as the map of figure 1, wherein each street name is related to the associated letter pair of the post code of this street. A user can hereby determine simply where he is in the locality, as seen on the map. He has only to read a street name-board and look up the associated post code letters in the index. The corresponding position on the map can be found using these letters. The index can of course also be used to localize a particular street on the map.

As an alternative, if the map can be printed on a sufficiently large scale, the street name can be printed in each street.

A further favourable embodiment comprises an index wherein the streets are ordered group-wise in accordance with the post code letter pair. This enables a reverse search procedure.

The method according to the invention can be supplemented with method steps which are customary for the printing of maps. Easily recognizable objects can be added to the illustration of the area. In the case of a street map as here described such recognizable objects may be churches, towers and the like. Information can also be added relating to the traffic situation, such as prescribed traffic flow directions and the like.

The invention is not limited to a method for producing a street map. A residential map for instance can be produced according to the same system. The different residential areas can therein be marked for instance in accordance with the first numeral of the post code district. Such a map can combine well with street maps of the above described type.

## Claims

1. Method for producing a street map of a built-up area, comprising of:
- producing an illustration substantially to scale of relevant objects, comprising at least the streets, in the area,
- selecting sub-sectors of the area in accordance with the sub-sectors used in a public address coding system,
- providing the illustrated sub-sectors with mutually differing sub-sector markings,
- providing the illustrations of the streets with detail markings, corresponding to detail codes in the address coding system,
- displaying a key indicating the relationship between the sub-sector and detail markings on the one hand and the relevant address codes, on the other hand,
- composing a film of the illustration of the area with the markings and the key for the purpose of manufacturing a printing plate,
- manufacturing a printing plate,
- printing sheet material using the printing plate,
- finishing the printed sheet material to a ready-to-use map.

2. Method as claimed in claim 1, wherein refining markings are included in the differently marked illustrated sub-sectors.

3. Method as claimed in claim 1 or 2, wherein the markings comprise colour markings.

4. Method as claimed in any of the foregoing claims, wherein a display of an index is added to the illustration, wherein names of illustrated objects, such as street names, shown in a sequence are related to the corresponding markings.

5. Method as claimed in any of the foregoing claims, wherein a display of an index is added to the illustration, wherein markings shown in a sequence are related to the corresponding names of objects such as street names.

6. Method as claimed in any of the foregoing claims, wherein the Netherlands post code system consisting of two numeral pairs and one letter pair is chosen for the public address coding system, the area corresponds with the residential locality designated by the second numeral pair and the separately marked sub-sectors correspond with the group of streets designated by the first letter of the letter pair.

7. Method as claimed in claims 2 and 6, wherein the refining markings are formed by the letter pairs generally designating in each case one street or part-street.

## Patentansprüche

1. Verfahren zur Herstellung eines Ortsplanes, mit folgenden Schritten:
- Herstellen einer im wesentlichen maßstabsgerechten Abbildung relevanter Objekte, mit zumindest den Straßen in dem Ort,
- Auswählen von Subbereichen des Ortes entsprechend der Subbereiche, die bei einem öffentlichen Adressencodesystem verwendet werden,
- Versehen der abgebildeten Subbereiche mit voneinander verschiedenen Subbereichs-Markierungen,
- Versehen der Abbildungen der Straßen mit Detailmarkierungen, die den Detailcodes in dem Adressencodesystem entsprechen,
- Anzeigen eines Codes, der die Beziehung zwischen dem Subbereich und den Detailmarkierungen einerseits und den relevanten Adressencodes andererseits angibt,
- Zusammensetzen eines Films der Abbildung des Ortes mit den Markierungen und dem Code zum Zwecke der Herstellung einer Druckplatte,
- Herstellen einer Druckplatte,
- Drucken von Kartenmaterial unter Verwendung der Druckplatte,
- Endbearbeitung des gedruckten Kartenmaterials zu einem fertig benutzbaren Plan.

2. Verfahren nach Anspruch 1, wobei Feinmarkierungen in den verschiedenen markierten, abgebildeten Subbereichen vorgesehen sind.

3. Verfahren nach Anspruch 1 oder 2, wobei die Markierungen farbige Markierungen aufweisen.

4. Verfahren nach einem der vorhergehenden Ansprüche, wobei eine Anzeige eines Verzeichnisses zu der Abbildung hinzugefügt ist, wobei Namen der abgebildeten Objekte, wie Straßennamen, die in einer Reihenfolge gezeigt sind, auf die entsprechenden Markierung bezogen sind.

5. Verfahren nach einem der vorhergehenden Ansprüche, wobei eine Anzeige eines Verzeichnisses zu der Abbildung hinzugefügt ist, wobei Markierungen, die in einer Reihenfolge gezeigt sind, auf die entsprechenden Namen von Objekten, wie Straßennamen, bezogen sind.

6. Verfahren nach einem der vorhergehenden Ansprüche, wobei das Niederländische Postcodesystem, das aus zwei Ziffernpaaren und einem Buchstabenpaar besteht, als öffentliches Adressencodesystem ausgewählt wird, der Ort dem Wohnort entspricht, der durch das zweite Ziffernpaar bezeichnet ist, und die einzelnen markierten Subbereiche der Gruppe von Straßen entsprechen, die durch den ersten Buchstaben des Buchstabenpaares bezeichnet sind.

7. Verfahren nach Anspruch 2 und 6, wobei die Feinmarkierungen im allgemeinen durch die Buchstabenpaare gebildet sind, die jeweils eine Straße oder einen Straßenteil bezeichnen.

## Revendications

1. Procédé de production d'un plan de rues d'une agglomération, comprenant les phases consistant à :
- produire une illustration sensiblement à l'échelle des objets pertinents qui comprennent au moins les rues, situées dans la zone,
- sélectionner des sous-secteurs de la zone conformément aux sous-secteurs utilisés dans un système public de codage d'adresses,
- munir les sous-secteurs représentés de marquages de sous-secteurs différents les uns des autres,
- munir les illustrations des rues de marquages de détail qui correspondent à des codes de détail du système de codage d'adresses,
- afficher une légende qui indique la relation entre le sous-secteur et les marquages de détail, d'une part, et ce sous-secteur et les codes d'adresses correspondants, d'autre part,
- composer un film de l'illustration de la zone, avec les marquages et la légende, pour la production d'une plaque d'impression,
- fabriquer une plaque d'impression,
- imprimer une matière en feuille à l'aide de la plaque d'impression, et
- transformer la matière en feuille imprimée en un plan prêt à l'usage par des opérations de finition.

2. Procédé selon la revendication 1, dans lequel des marquages d'affinage sont inclus dans les sous-secteurs illustrés portant des marquages différents.

3. Procédé selon la revendication 1 ou 2, dans lequel les marquages comprennent des marquages en couleur.

4. Procédé selon une quelconque des revendications précédentes, dans lequel on ajoute à l'illustration la présentation d'un index dans lequel les noms des objets représentés, tels que les noms des rues, indiqués en une succession, sont rapportés aux marquages correspondants.

5. Procédé selon une quelconque des revendications précédentes, dans lequel on ajoute à l'illustration la présentation d'un index dans lequel des marquages indiqués en une succession sont rapportés aux noms correspondants d'objets tels que des noms de rues.

6. Procédé selon une quelconque des revendications précédentes, dans lequel on choisit pour le système public de codage des adresses le système de code postal des Pays-Bas, qui est composé de deux paires de chiffres et d'une paire de lettres, la zone correspondant au quartier ou à la localité d'habitation étant désignée par la deuxième paire de chiffres et les sous-secteurs marqués séparément correspondant aux groupes de rues étant désignés par la première lettre de la paire de lettres.

7. Procédé selon la revendication 2 ou 6, dans lequel les marquages d'affinage sont formés par les paires de lettres qui désignent généralement dans chaque cas une rue ou une partie de rue.
